(19) Europäisches Patentamt
European Patent Office
Office européen des brevets

(11) **EP 4 752 542 A1**

(12) **EUROPEAN PATENT APPLICATION**
published in accordance with Art. 153(4) EPC

(43) Date of publication:
**03.06.2026 Bulletin 2026/23**

(51) International Patent Classification (IPC):
*G01N 30/02* (2006.01)     *G01N 30/72* (2006.01)
*G01N 30/86* (2006.01)     *G06F 17/18* (2006.01)

(21) Application number: 25801848.0

(22) Date of filing: 23.06.2025

(86) International application number:
**PCT/CN2025/102716**

(87) International publication number:
**WO 2026/077004 (16.04.2026 Gazette 2026/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 08.10.2024 CN 202411391057

(71) Applicant: China Tobacco Yunnan Industrial Co., Ltd.
**Kunming, Yunnan 650024 (CN)**

(72) Inventors:
• **LI, Chao**
  **Kunming, Yunnan 650032 (CN)**
• **YE, Xiangrui**
  **Kunming, Yunnan 650032 (CN)**
• **YANG, Lei**
  **Kunming, Yunnan 650032 (CN)**
• **ZHANG, Tao**
  **Kunming, Yunnan 650032 (CN)**

• **ZHANG, Tao**
  **Kunming, Yunnan 650032 (CN)**
• **HE, Xuefeng**
  **Kunming, Yunnan 650032 (CN)**
• **FAN, Duoqing**
  **Kunming, Yunnan 650032 (CN)**
• **ZHU, Ming**
  **Kunming, Yunnan 650032 (CN)**
• **YANG, Yanyang**
  **Kunming, Yunnan 650032 (CN)**
• **XU, Chunping**
  **Kunming, Yunnan 650032 (CN)**
• **WANG, Jin**
  **Kunming, Yunnan 650032 (CN)**
• **WANG, Xixuan**
  **Kunming, Yunnan 650032 (CN)**

(74) Representative: **Fezzardi, Antonio et al**
**Studio Ferrario Srl**
**Via Collina, 36**
**00187 Roma (IT)**

(54) **EVALUATION METHOD FOR WOODY NOTE OF CIGARETTE SMOKE AND USE THEREOF**

(57)     Provided are an evaluation method for the woody aroma note of cigarette smoke and use thereof. The evaluation method comprises the following steps: (1) collecting a mainstream smoke total particulate matter of a typical woody-type cigarette and a typical non-woody-type cigarette, performing GC-MS detection to obtain a content of an aroma-contributing component; and conducting partial least squares-discriminant analysis on the content of the aroma-contributing component to obtain a VIP value of the aroma-contributing component; (2) collecting a mainstream smoke total particulate matter of a cigarette to be tested, and performing GC-MS detection to obtain a content of an aroma-contributing component in the cigarette to be tested; and (3) calculating a woody aroma note index Q based on the VIP value and the content of the aroma-contributing component in the cigarette to be tested. The evaluation method provided in the present application can objectively and accurately reflect the woody aroma note of cigarette smoke, avoiding the subjective errors inherent in sensory evaluation and the mismatch between the analysis result of aroma-contributing components in cut tobacco and the actual smoking experience, thereby providing a novel approach for characterizing and evaluating the woody aroma note of cigarette smoke.

EP 4 752 542 A1

**Description**

TECHNICAL FIELD

The present application belongs to the technical field of tobacco analysis, and specifically relates to an evaluation method for the woody aroma note of cigarette smoke and use thereof.

BACKGROUND

The consumption pattern of cigarette products by consumers determines that the characteristic aroma notes of the cigarette smoke are decisive in defining a cigarette's style, serving as one of the most critical foundations for product category development. Relevant studies have shown that the overall aroma profile of a cigarette is primarily formed by the combined interaction of its various characteristic aroma notes. Furthermore, each characteristic aroma note is underpinned by a distinct set of materials that make significant contributions. At present, sensory evaluation remains the cornerstone of the characteristic aroma note assessment system. However, this method lacks support from objective data and is relatively time-consuming and labor-intensive to implement. At the molecular level of the material basis, researchers in the industry have characterized aroma profiles based on aroma-contributing components in cut tobacco using indices, which has a certain positive effect in evaluating aroma characteristics. However, this approach does not fully account for the transfer rate of aroma-contributing components from the cut tobacco into the cigarette smoke, or the changes in types and contents of aroma-contributing components during the combustion process of cigarettes. This is particularly critical for the woody aroma note, as it can significantly influence consumers' sensory evaluation of cigarette products, making its evaluation especially important.

Therefore, it is particularly important to utilize instrumental analysis and detection methods, combined with multivariate statistical analysis techniques, and based on aroma-contributing components of cigarette smoke, to identify and extract a set of characteristic aroma-contributing components that significantly contribute to the woody aroma note of cigarette smoke from various chemical components, so as to objectively and accurately characterize and evaluate the characteristic aroma notes of cigarette smoke.

SUMMARY

The following is a brief summary of subject matter that is described in greater detail herein. This summary is not intended to be limiting as to the scope of the claims.

In view of the shortcomings of existing technologies, an object of the present application is to provide an evaluation method for the woody aroma note of cigarette smoke and use thereof. The evaluation method provided in the present application can objectively and accurately reflect the woody aroma note of cigarette smoke, avoiding the subjective errors inherent in sensory evaluation and the mismatch between the analysis result of aroma-contributing components in cut tobacco and the actual smoking experience, providing a novel approach for characterizing and evaluating the woody aroma note of cigarette smoke, playing a significantly positive role in the rapid assessment of the woody aroma note of cigarette smoke and research on the enhancement of the woody character of cigarettes.

To achieve the object, the present application adopts the following technical solution.

On one hand, the present application provides an evaluation method for the woody aroma note of cigarette smoke, and the evaluation method comprises the following steps:

(1) collecting a mainstream smoke total particulate matter of a typical woody-type cigarette and a typical non-woody-type cigarette, performing GC-MS (gas chromatography-mass spectrometry) detection to obtain a content of an aroma-contributing component in the typical woody-type cigarette and the typical non-woody-type cigarette; and conducting partial least squares-discriminant analysis on the content of the aroma-contributing component to obtain a VIP value (variable importance in projection value) of the aroma-contributing component;

(2) collecting a mainstream smoke total particulate matter of a cigarette to be tested, and performing GC-MS detection to obtain a content of an aroma-contributing component in the cigarette to be tested; and

(3) calculating a woody aroma note index Q for cigarette smoke of the cigarette to be tested based on the VIP value of the aroma-contributing component from step (1) and the content of the aroma-contributing component in the cigarette to be tested obtained in step (2), and determining a degree of the woody aroma note of cigarette smoke of the cigarette to be tested;

steps (1) and (2) are not required to be performed in a particular order.

The aroma-contributing component comprises a positively correlated aroma-contributing component and a negatively correlated aroma-contributing component.

The positively correlated aroma-contributing component comprises any one or a combination of at least two of a terpenoid aroma-contributing component, a positively correlated ketonic aroma-contributing component, or a positively correlated phenolic aroma-contributing component. The negatively correlated aroma-contributing component comprises any one or a combination of at least two of a nitrogen-containing heterocyclic aroma-contributing component, a furanic aroma-contributing component, a negatively correlated ketonic aroma-contributing component, or a negatively correlated phenolic aroma-contributing component.

In the above method, by analyzing the aroma-contributing component in the typical woody-type cigarette, the typical non-woody-type cigarette, and the cigarette to be tested, utilizing the partial least squares-discriminant analysis to obtain the VIP value, and combining with the content of the aroma-contributing component to calculate the woody aroma note index Q, the woody aroma note of cigarette smoke can be objectively and accurately reflected, avoiding the subjective errors inherent in sensory evaluation and the mismatch between the analysis result of aroma-contributing components in cut tobacco and the actual smoking experience, providing a novel approach for characterizing and evaluating the woody aroma note of cigarette smoke, and playing a significantly positive role in the rapid assessment of the woody aroma note of cigarette smoke and research on the enhancement of the woody character of cigarettes.

In one embodiment, the positively correlated aroma-contributing component comprises a combination of a terpenoid aroma-contributing component, a positively correlated ketonic aroma-contributing component, and a positively correlated phenolic aroma-contributing component.

In one embodiment, the negatively correlated aroma-contributing component comprises a combination of a nitrogen-containing heterocyclic aroma-contributing component, a furanic aroma-contributing component, a negatively correlated ketonic aroma-contributing component, and a negatively correlated phenolic aroma-contributing component.

In one embodiment, the terpenoid aroma-contributing component comprises neophytadiene.

In one embodiment, the positively correlated ketonic aroma-contributing component comprises solanone and/or 2,3-dihydro-1H-inden-1-one.

In one embodiment, the positively correlated phenolic aroma-contributing component comprises 3-ethyl-5-methylphenol.

In one embodiment, the nitrogen-containing heterocyclic aroma-contributing component comprises pyridine.

In one embodiment, the furanic aroma-contributing component comprises 2-ethylfuran.

In one embodiment, the negatively correlated ketonic aroma-contributing component comprises 1-hydroxybutan-2-one.

In one embodiment, the negatively correlated phenolic aroma-contributing component comprises eugenol.

In one embodiment, the aroma-contributing component comprises neophytadiene, solanone, 2,3-dihydro-1H-inden-1-one, 3-ethyl-5-methylphenol, pyridine, 2-ethylfuran, 1-hydroxybutan-2-one, and eugenol.

The combination of the above specified aroma-contributing components enables a comprehensive and effective evaluation of the woody aroma note of cigarette smoke of the cigarette to be tested, significantly enhancing the accuracy of the evaluation.

In one embodiment, in the GC-MS detection, a chromatographic column is HP-5MS.

In one embodiment, in the GC-MS detection, a carrier gas flow rate is 1.0-1.2 mL/min, for example, 1 mL/min, 1.1 mL/min, or 1.2 mL/min, but is not limited to the listed values, and other unlisted values within the numerical range are also applicable.

In one embodiment, in the GC-MS detection, a temperature program is as follows:

setting 50-60°C as an initial temperature and maintaining for 1.0-1.4 min; heating to 160-180°C at a rate of 8-10°C/min and maintaining for 3-4.5 min; and heating to 220-240°C at a rate of 8-10°C/min and maintaining for 13-15 min; and then heating to 250-270°C at a rate of 8-10°C/min and maintaining for 9-10 min.

The above specific GC-MS detection conditions can effectively improve the accuracy of the detection results, and thereby enhance the accuracy of the evaluation results.

In one embodiment, a calculation formula of the woody aroma note index Q in step (3) is as follows:

$$Q = \Sigma(\text{content of positively correlated aroma-contributing component } i \times VIP_i) / \Sigma(\text{content of negatively correlated aroma-contributing component } j \times VIP_j);$$

wherein $VIP_i$ refers to the VIP value of the positively correlated aroma-contributing component i, and $VIP_j$ refers to the VIP value of the negatively correlated aroma-contributing component j.

In the above formula, the woody aroma note of cigarette smoke has a positive correlation to the index Q, that is, a higher Q (woody aroma note index of cigarette smoke of the cigarette to be tested) value indicates a more intense woody aroma character of the cigarette smoke.

On the other hand, the present application further provides use of the above evaluation method in the evaluation and analysis of aroma note of cigarette smoke.

Compared with the prior art, the present application has the following beneficial effects.

The present application provides an evaluation method for the woody aroma note of cigarette smoke. By analyzing the aroma-contributing component in the typical woody-type cigarette, the typical non-woody-type cigarette, and the cigarette to be tested, utilizing the partial least squares-discriminant analysis to obtain the VIP value, and combining with the content of the aroma-contributing component to calculate the woody aroma note index Q, the woody aroma note of cigarette smoke can be objectively and accurately reflected, avoiding the subjective errors inherent in sensory evaluation and the mismatch between the analysis result of aroma-contributing components in cut tobacco and the actual smoking experience, providing a novel approach for characterizing and evaluating the woody aroma note of cigarette smoke, and playing a significantly positive role in the rapid assessment of the woody aroma note of cigarette smoke and research on the enhancement of the woody character of cigarettes.

Other aspects will be appreciated upon reading and understanding the detailed description.

DETAILED DESCRIPTION

To further illustrate the technical schemes employed in the present application and effects thereof, the technical solutions of the present application will be further explained below in conjunction with preferred embodiments of the present application; however, the present application is not limited to the scope of the embodiments.

**Example 1**

This example provides an evaluation method for the woody aroma note of cigarette smoke, and the specific steps are as follows.

Detection of aroma-contributing components

The mainstream smoke total particulate matter of cigarettes was collected according to the method specified in the Chinese National Standard GB/T 19609-2004 "Cigarette - Determination of total and nicotine-free dry particulate matter using a routine analytical smoking machine".

The collected filter disc was put into a simultaneous distillation-extraction apparatus, and subjected to simultaneous distillation-extraction for 2 h by using dichloromethane as a solvent. The obtained extract was dried with anhydrous sodium sulfate, then placed in a rotary evaporator and concentrated to 1.0 mL, and added with 50 $\mu$L (0.1 mol/L) of benzyl acetate solution in anhydrous ethanol, and shaken well for later GC-MS analysis.

Conditions for GC-MS analysis

Chromatographic column: HP-5MS (30 m $\times$ 0.25 mm $\times$ 0.25 $\mu$m) capillary column; inlet temperature: 240°C; transmission line temperature: 280°C; carrier gas: He, with a flow rate of 1.1 mL/min; temperature programming: the temperature was maintained at 55°C for 1.2 min, heated to 170°C at a rate of 9°C/min and maintained for 4 min, and heated to 230°C at a rate of 9°C/min and maintained for 14 min, and then heated to 260°C at a rate of 9°C/min and maintained for 10 min; injection volume: 1 $\mu$L, with a split ratio of 10:1; EI ionization energy: 70 eV; ion source temperature: 230°C; quadrupole temperature: 160°C; mass range: 35-455 amu. The retrieval and qualitative analysis were performed by using the NIST 17 and Wiley 275 standard mass spectral libraries, and the content of partial aroma-contributing components was determined using the internal standard method.

(1) Aroma-contributing components in typical woody-type cigarettes and typical non-woody-type cigarettes were detected using the above method. Partial least squares-discriminant analysis (PLS-DA) was performed using a chemometrics statistical software SIMCA 14.1. The VIP values of aroma-contributing components of neophytadiene, solanone, 2,3-dihydro-1H-inden-1-one, 3-ethyl-5-methylphenol, pyridine, 2-ethylfuran, 1-hydroxybutan-2-one, and eugenol were calculated, which is shown in the table below.

| Aroma-contributing component | VIP value |
|---|---|
| Neophytadiene | 1.275 |
| Solanone | 1.285 |
| 3-Ethyl-5-methylphenol | 1.125 |
| 2,3-Dihydro-1H-inden-1-one | 1.317 |

(continued)

| Aroma-contributing component | VIP value |
|---|---|
| 1-Hydroxybutan-2-one | 1.506 |
| Eugenol | 1.541 |
| Pyridine | 1.544 |
| 2-Ethylfuran | 1.579 |

(2) The above method was employed to determine the aroma-contributing components in 38 types of commercially available cigarettes, and the results are shown in the table below.

| Sample name | Compound name (unit: μg/individual) | | | | | | | |
|---|---|---|---|---|---|---|---|---|
| | Neophy tadiene | Solanone | 3-Ethyl-5-methyl phenol | 2,3-Dihyd ro-1H-ind en-1-one | 1-Hydro xybutan-2-one | Eugenol | Pyridine | 2-Ethyl furan |
| JP-1 | 7.344 | 2.348 | 1.549 | 1.666 | 0.299 | 0.000 | 0.982 | 0.598 |
| JP-2 | 4.241 | 2.288 | 1.776 | 1.621 | 0.000 | 0.000 | 0.763 | 0.572 |
| JP-3 | 3.576 | 2.169 | 1.156 | 1.103 | 0.000 | 0.000 | 1.560 | 1.331 |
| JP-4 | 4.898 | 2.383 | 1.298 | 1.280 | 0.573 | 0.000 | 1.721 | 1.347 |
| JP-5 | 2.130 | 2.130 | 0.93 | 1.075 | 0.245 | 0.000 | 0.803 | 0.454 |
| JP-6 | 5.293 | 2.732 | 1.674 | 1.650 | 0.000 | 0.000 | 1.081 | 0.911 |
| JP-7 | 5.025 | 2.233 | 1.414 | 1.395 | 0.000 | 0.000 | 1.303 | 0.884 |
| JP-8 | 4.780 | 1.856 | 1.162 | 1.106 | 0.000 | 0.000 | 0.909 | 0.593 |
| JP-9 | 4.936 | 2.985 | 1.97 | 1.951 | 0.000 | 0.000 | 1.148 | 0.812 |
| JP-10 | 5.152 | 1.770 | 1.122 | 0.936 | 0.000 | 10.459 | 0.416 | 0.208 |
| JP-11 | 3.583 | 2.559 | 1.551 | 1.489 | 0.251 | 0.000 | 0.884 | 0.558 |
| JP-12 | 3.695 | 2.373 | 1.476 | 1.415 | 0.228 | 0.000 | 1.094 | 0.593 |
| JP-13 | 4.729 | 3.189 | 1.779 | 1.594 | 0.000 | 0.000 | 0.495 | 0.220 |
| JP-14 | 5.871 | 1.844 | 1.07 | 1.205 | 0.000 | 0.000 | 1.280 | 0.715 |
| JP-15 | 6.251 | 2.590 | 1.656 | 1.802 | 0.169 | 0.000 | 0.394 | 0.225 |
| JP-16 | 9.625 | 1.939 | 1.188 | 1.073 | 0.000 | 0.831 | 0.043 | 0.069 |
| JP-17 | 7.608 | 3.479 | 2.024 | 2.241 | 0.000 | 0.000 | 0.472 | 0.236 |
| JP-18 | 4.393 | 2.605 | 1.337 | 1.207 | 0.204 | 2.350 | 0.715 | 0.358 |
| JP-19 | 4.763 | 2.454 | 1.792 | 1.684 | 0.000 | 0.000 | 0.529 | 0.241 |
| JP-20 | 7.108 | 2.009 | 1.174 | 1.353 | 0.193 | 0.000 | 0.541 | 0.309 |
| JP-21 | 4.843 | 2.338 | 1.269 | 1.253 | 0.000 | 0.000 | 0.417 | 0.334 |
| JP-22 | 4.540 | 2.343 | 1.436 | 1.367 | 0.000 | 0.000 | 0.489 | 0.244 |
| JP-23 | 4.716 | 2.091 | 1.716 | 1.653 | 0.243 | 1.313 | 0.924 | 0.680 |
| JP-24 | 5.404 | 2.032 | 1.127 | 1.265 | 0.000 | 0.920 | 0.613 | 0.460 |
| JP-25 | 5.699 | 2.395 | 1.105 | 1.019 | 0.240 | 1.197 | 0.958 | 0.526 |
| JP-26 | 6.234 | 2.224 | 1.368 | 1.308 | 0.000 | 1.265 | 0.828 | 0.436 |
| JP-27 | 2.453 | 1.893 | 1.134 | 1.191 | 0.210 | 1.086 | 0.666 | 0.456 |
| JP-28 | 2.484 | 1.552 | 1.066 | 1.056 | 0.249 | 0.931 | 0.652 | 0.497 |
| JP-29 | 4.217 | 2.214 | 1.503 | 1.491 | 0.000 | 0.000 | 0.937 | 0.537 |

(continued)

| Sample name | Compound name (unit: μg/individual) | | | | | | | |
|---|---|---|---|---|---|---|---|---|
| | Neophy tadiene | Solanone | 3-Ethyl-5-methyl phenol | 2,3-Dihydro-1H-ind en-1-one | 1-Hydro xybutan-2-one | Eugenol | Pyridine | 2-Ethyl furan |
| JP-30 | 8.280 | 2.617 | 1.391 | 1.145 | 0.000 | 0.000 | 0.534 | 0.320 |
| JP-31 | 2.692 | 2.606 | 1.801 | 1.710 | 0.000 | 0.000 | 0.556 | 0.299 |
| JP-32 | 2.213 | 1.925 | 1.793 | 1.588 | 0.198 | 1.203 | 0.818 | 0.673 |
| JP-33 | 4.139 | 1.932 | 1.198 | 1.143 | 0.000 | 0.000 | 0.788 | 0.670 |

| JP-34 | 2.208 | 2.007 | 1.246 | 1.372 | 0.236 | 0.000 | 0.870 | 0.569 |
|---|---|---|---|---|---|---|---|---|
| JP-35 | 4.063 | 2.539 | 1.629 | 1.524 | 0.000 | 1.431 | 1.155 | 0.877 |
| JP-36 | 3.702 | 2.868 | 1.84 | 1.825 | 0.000 | 0.000 | 1.356 | 1.148 |
| JP-37 | 2.351 | 1.794 | 1.092 | 1.021 | 0.000 | 0.000 | 0.959 | 0.630 |
| JP-38 | 5.922 | 2.667 | 1.678 | 1.483 | 0.142 | 0.000 | 0.587 | 0.320 |

(3) The woody aroma note index Q of cigarette smoke of the above corresponding 38 types of commercially available cigarettes was calculated, and the Q index reflected the woody aroma note of cigarette smoke; the woody aroma note index Q of cigarette smoke of the cigarette to be tested was calculated using a weighted statistical method, with the formula as follows:

$Q = \Sigma$(content of positively correlated aroma-contributing component $i \times VIP_i$) / $\Sigma$(content of negatively correlated aroma-contributing component $j \times VIP_j$).

In the above formula, $VIP_i$ referred to the VIP value of the positively correlated aroma-contributing component i, and $VIP_j$ referred to the VIP value of the negatively correlated aroma-contributing component j. The positively correlated aroma-contributing component was neophytadiene, solanone, 2,3-dihydro-1H-inden-1-one, and 3-ethyl-5-methylphenol. The negatively correlated aroma-contributing component was pyridine, 2-ethylfuran, 1-hydroxybutan-2-one, and eugenol. The results are shown in the table below.

| Sample name | Q value | Sample name | Q value | Sample name | Q value |
|---|---|---|---|---|---|
| JP-1 | 5.61 | JP-14 | 4.07 | JP-27 | 2.25 |
| JP-2 | 6.00 | JP-15 | 12.74 | JP-28 | 2.15 |
| JP-3 | 2.24 | JP-16 | 12.02 | JP-29 | 5.18 |
| JP-4 | 2.20 | JP-17 | 17.62 | JP-30 | 12.77 |
| JP-5 | 3.40 | JP-18 | 2.15 | JP-31 | 8.31 |
| JP-6 | 4.61 | JP-19 | 11.24 | JP-32 | 2.10 |
| JP-7 | 3.73 | JP-20 | 9.14 | JP-33 | 4.66 |
| JP-8 | 4.81 | JP-21 | 10.47 | JP-34 | 3.31 |
| JP-9 | 4.88 | JP-22 | 10.72 | JP-35 | 2.29 |
| JP-10 | 0.66 | JP-23 | 2.62 | JP-36 | 3.30 |
| JP-11 | 4.41 | JP-24 | 4.02 | JP-37 | 3.18 |
| JP-12 | 3.80 | JP-25 | 2.86 | JP-38 | 9.12 |
| JP-13 | 12.80 | JP-26 | 3.59 | | |

(4) To validate the close correlation between the Q value and the intensity trend of the woody aroma note of cigarette smoke, a grouped comparative sensory evaluation was conducted. 18 groups of samples were randomly selected and distributed according to high, medium, and low Q values. Each group consisted of No. 1, No. 2, and No. 3, with the Q value descending in the order of No. 1 > No. 2 > No. 3. A sensory panel of twelve experts performed the comparative smoking evaluation in accordance with the stipulations of GB 5606.4-2005 "Cigarettes - Technical Requirements for Sense Taste". The results demonstrated that the evaluation conclusions for six groups were consistent with the Q value trends (see table below), indicating the Q value has applicable value in characterizing and evaluating the woody aroma note of cigarette smoke, and can accurately and effectively evaluate the woody aroma note of cigarette smoke.

| No. 1 | | No. 2 | | No. 3 | | Sensory evaluation result of woody aroma note |
|---|---|---|---|---|---|---|
| Sample name | Q value | Sample name | Q value | Sample name | Q value | |
| JP-17 | 17.62 | JP-20 | 9.14 | JP-4 | 2.20 | No. 1 > No. 2 > No. 3 |
| JP-30 | 12.77 | JP-34 | 3.31 | JP-18 | 2.15 | No. 1 > No. 2 > No. 3 |
| JP-16 | 12.02 | JP-7 | 3.73 | JP-23 | 2.62 | No. 1 > No. 2 > No. 3 |
| JP-22 | 10.72 | JP-5 | 3.40 | JP-10 | 0.66 | No. 1 > No. 2 > No. 3 |
| JP-31 | 8.31 | JP-12 | 3.80 | JP-32 | 2.10 | No. 1 > No. 2 > No. 3 |
| JP-33 | 4.66 | JP-14 | 4.07 | JP-37 | 3.18 | No. 1 > No. 2 > No. 3 |

**Example 2**

This example provides an evaluation method for the woody aroma note of cigarette smoke. The specific steps were the same as Example 1, except that the GC-MS analysis conditions were as follows.

Conditions for GC-MS analysis

Chromatographic column: HP-5MS (30 m × 0.25 mm × 0.25 μm) capillary column; inlet temperature: 240°C; transmission line temperature: 280°C; carrier gas: He, with a flow rate of 1.0 mL/min; temperature programming: the temperature was maintained at 50°C for 1 min, heated to 180°C at a rate of 10°C/min and maintained for 4.5 min, and heated to 220°C at a rate of 8°C/min and maintained for 13 min, and then heated to 270°C at a rate of 8°C/min and maintained for 10 min; injection volume: 1 μL, with a split ratio of 10:1; EI ionization energy: 70 eV; ion source temperature: 230°C; quadrupole temperature: 160°C; mass range: 35-455 amu. The retrieval and qualitative analysis were performed by using the NIST 17 and Wiley 275 standard mass spectral libraries, and the content of partial aroma-contributing components was determined using the internal standard method.

**Example 3**

This example provides an evaluation method for the woody aroma note of cigarette smoke. The specific steps were the same as Example 1, except that the GC-MS analysis conditions were as follows.

Conditions for GC-MS analysis

Chromatographic column: HP-5MS (30 m × 0.25 mm × 0.25 μm) capillary column; inlet temperature: 240°C; transmission line temperature: 280°C; carrier gas: He, with a flow rate of 1.0 mL/min; temperature programming: the temperature was maintained at 60°C for 1.4 min, heated to 160°C at a rate of 8°C/min and maintained for 3 min, and heated to 240°C at a rate of 10°C/min and maintained for 15 min, and then heated to 250°C at a rate of 8°C/min and maintained for 9 min; injection volume: 1 μL, with a split ratio of 10:1; EI ionization energy: 70 eV; ion source temperature: 230°C; quadrupole temperature: 160°C; mass range: 35-455 amu. The retrieval and qualitative analysis were performed by using the NIST 17 and Wiley 275 standard mass spectral libraries, and the content of partial aroma-contributing components was determined using the internal standard method.

**Example 4**

This example provides an evaluation method for the woody aroma note of cigarette smoke. The specific steps were the same as Example 1, except that the chromatographic column HP-5MS was replaced with DB-35MS.

**Example 5**

This example provides an evaluation method for the woody aroma note of cigarette smoke. The specific steps were the same as Example 1, except that the temperature programming was as follows:
the temperature was maintained at 60°C for 2 min, heated to 240°C at a rate of 20°C/min and maintained for 8 min, and then heated to 280°C at a rate of 5°C/min and maintained for 8 min.

**Example 6**

This example provides an evaluation method for the woody aroma note of cigarette smoke. The specific steps were the same as Example 1, except that neophytadiene was not contained in the aroma-contributing component.

**Example 7**

This example provides an evaluation method for the woody aroma note of cigarette smoke. The specific steps were the same as Example 1, except that solanone and 2,3-dihydro-1H-inden-1-one were not contained in the aroma-contributing component.

**Example 8**

This example provides an evaluation method for the woody aroma note of cigarette smoke. The specific steps were the same as Example 1, except that 1-hydroxybutan-2-one was not contained in the aroma-contributing component.

**Example 9**

This example provides a method for evaluating the intensity of the woody aroma note of cigarette smoke. The specific steps were the same as Example 1, except that eugenol was not contained in the aroma-contributing component.

**Example 10**

This example provides a method for evaluating the intensity of the woody aroma note of cigarette smoke. The specific steps were the same as Example 1, except that 3-ethyl-5-methylphenol was not contained in the aroma-contributing component.

**Example 11**

This example provides a method for evaluating the intensity of the woody aroma note of cigarette smoke. The specific steps were the same as Example 1, except that 2-ethylfuran was not contained in the aroma-contributing component.

**Example 12**

This example provides a method for evaluating the intensity of the woody aroma note of cigarette smoke. The specific steps were the same as Example 1, except that pyridine was not contained in the aroma-contributing component.

**Effectiveness Test**

An additional seven groups of cigarette samples with varying intensities of the woody aroma note of cigarette smoke were selected. A sensory panel composed of twelve experts conducted a comparative evaluation in accordance with the provisions of GB 5606.4-2005 "Cigarettes - Technical Requirements for Sense Taste" and determined that the intensity was ranked from lowest to highest as A, B, C, D, E, F, and G. Subsequently, the methods provided in Examples 1-12 were applied to these seven groups of cigarettes for grading, and the Q value was calculated. The results are as follows.

| Group | Q value | | | | | | |
|---|---|---|---|---|---|---|---|
| | A | B | C | D | E | F | G |
| Example 1 | 17.62 | 9.14 | 4.66 | 3.73 | 3.40 | 2.15 | 2.10 |
| Example 2 | 19.22 | 10.00 | 5.09 | 4.07 | 3.71 | 2.20 | 2.19 |
| Example 3 | 16.16 | 8.36 | 4.28 | 3.42 | 3.42 | 2.10 | 2.02 |
| Example 4 | 14.84 | 7.65 | 3.93 | 2.88 | 3.14 | 2.05 | 1.95 |
| Example 5 | 20.98 | 10.95 | 5.56 | 4.44 | 4.04 | 2.24 | 2.25 |
| Example 6 | 8.81 | 3.52 | 2.34 | 1.85 | 2.24 | 1.15 | 1.47 |
| Example 7 | 10.88 | 6.44 | 2.91 | 1.62 | 2.35 | 1.27 | 1.08 |
| Example 8 | 17.62 | 11.15 | 4.66 | 3.73 | 4.05 | 2.28 | 2.25 |
| Example 9 | 17.62 | 9.14 | 4.66 | 3.73 | 3.40 | 6.09 | 3.58 |
| Example 10 | 15.55 | 8.32 | 4.07 | 2.95 | 3.26 | 1.88 | 1.65 |
| Example 11 | 26.60 | 13.11 | 8.72 | 6.32 | 4.92 | 2.39 | 2.75 |
| Example 12 | 52.14 | 18.95 | 10.03 | 9.10 | 7.29 | 2.68 | 2.93 |

From the above results, it can be found that in the present application, by controlling specific chromatographic parameters and selecting a specific combination of aroma-contributing components, the woody aroma note of the smoke of the cigarette to be tested can be more accurately, comprehensively, and effectively evaluated, effectively improving the accuracy of the evaluation results.

The applicant declares that the present application illustrates the evaluation method for the woody aroma note of cigarette smoke and use thereof of the present application by the above examples, but the present application is not limited to the above examples, that is, the present application does not necessarily rely on the above examples to be implemented. Those skilled in the art should understand that any improvements of the present application, the equivalent substitution of each raw material, the addition of auxiliary ingredients, and the selection of specific methods shall fall within the protection scope and disclosure scope of the present application.

The above describes in detail the preferred embodiments of the present application. However, the present application is not limited to the specific details in the above embodiments, and various simple variations of the technical solutions of the present application can be made within the scope of the technical conception of the present application, all of these simple variations shall fall within the protection scope of the present application.

It is also to be noted that the various specific technical features described in the above specific embodiments may be combined in any suitable manners without contradiction, and in order to avoid unnecessary repetition, the various possible combinations are not described separately in the present application.

**Claims**

1.    An evaluation method for the woody aroma note of cigarette smoke, comprising the following steps:

(1) collecting a mainstream smoke total particulate matter of a typical woody-type cigarette and a typical non-woody-type cigarette, performing GC-MS detection to obtain a content of an aroma-contributing component in the typical woody-type cigarette and the typical non-woody-type cigarette; and conducting partial least squares-discriminant analysis on the content of the aroma-contributing component to obtain a VIP value of the aroma-contributing component;

(2) collecting a mainstream smoke total particulate matter of a cigarette to be tested, and performing GC-MS detection to obtain a content of an aroma-contributing component in the cigarette to be tested; and

(3) calculating a woody aroma note index Q for cigarette smoke of the cigarette to be tested according to the VIP value of the aroma-contributing component from step (1) and the content of the aroma-contributing component in the cigarette to be tested obtained in step (2), and determining a degree of the woody aroma note of cigarette smoke of the cigarette to be tested;

steps (1) and (2) are not required to be performed in a particular order;

the aroma-contributing component comprises a positively correlated aroma-contributing component and a negatively correlated aroma-contributing component;

the positively correlated aroma-contributing component comprises any one or a combination of at least two of a terpenoid aroma-contributing component, a positively correlated ketonic aroma-contributing component, or a positively correlated phenolic aroma-contributing component; and the negatively correlated aroma-contributing component comprises any one or a combination of at least two of a nitrogen-containing heterocyclic aroma-contributing component, a furanic aroma-contributing component, a negatively correlated ketonic aroma-contributing component, or a negatively correlated phenolic aroma-contributing component.

2. The evaluation method according to claim 1, wherein the positively correlated aroma-contributing component comprises a combination of a terpenoid aroma-contributing component, a positively correlated ketonic aroma-contributing component, and a positively correlated phenolic aroma-contributing component;
optionally, the negatively correlated aroma-contributing component comprises a combination of a nitrogen-containing heterocyclic aroma-contributing component, a furanic aroma-contributing component, a negatively correlated ketonic aroma-contributing component, and a negatively correlated phenolic aroma-contributing component.

3. The evaluation method according to claim 2, wherein the terpenoid aroma-contributing component comprises neophytadiene;

    optionally, the positively correlated ketonic aroma-contributing component comprises solanone and/or 2,3-dihydro-1H-inden-1-one;
    optionally, the positively correlated phenolic aroma-contributing component comprises 3-ethyl-5-methylphenol.

4. The evaluation method according to claim 2 or 3, wherein the nitrogen-containing heterocyclic aroma-contributing component comprises pyridine;

    optionally, the furanic aroma-contributing component comprises 2-ethylfuran;
    optionally, the negatively correlated ketonic aroma-contributing component comprises 1-hydroxybutan-2-one;
    optionally, the negatively correlated phenolic aroma-contributing component comprises eugenol.

5. The evaluation method according to claim 3 or 4, wherein the aroma-contributing component comprises neophytadiene, solanone, 2,3-dihydro-1H-inden-1-one, 3-ethyl-5-methylphenol, pyridine, 2-ethylfuran, 1-hydroxybutan-2-one, and eugenol.

6. The evaluation method according to any one of claims 1-5, wherein in the GC-MS detection, a chromatographic column is HP-5MS.

7. The evaluation method according to any one of claims 1-6, wherein in the GC-MS detection, a carrier gas flow rate is 1.0-1.2 mL/min.

8. The evaluation method according to any one of claims 1-7, wherein in the GC-MS detection, a temperature program is as follows:
setting 50-60°C as an initial temperature and maintaining for 1.0-1.4 min; heating to 160-180°C at a rate of 8-10°C/min and maintaining for 3-4.5 min; and heating to 220-240°C at a rate of 8-10°C/min and maintaining for 13-15 min; and then heating to 250-270°C at a rate of 8-10°C/min and maintaining for 9-10 min.

9. The evaluation method according to any one of claims 1-8, wherein a calculation formula of the woody aroma note index Q in step (3) is as follows:

    $Q = \Sigma$(content of positively correlated aroma-contributing component i $\times$ $VIP_i$) / $\Sigma$(content of negatively correlated aroma-contributing component j $\times$ $VIP_j$);

    wherein $VIP_i$ refers to the VIP value of the positively correlated aroma-contributing component i, and $VIP_j$ refers to the VIP value of the negatively correlated aroma-contributing component j.

10. Use of the evaluation method according to any one of claims 1-9 in the evaluation and analysis of aroma note of cigarette smoke.

TRANSLATION

## INTERNATIONAL SEARCH REPORT

| International application No. |
| --- |
| **PCT/CN2025/102716** |

### A. CLASSIFICATION OF SUBJECT MATTER

G01N30/02(2006.01)i; G01N30/72(2006.01)i; G01N30/86(2006.01)i; G06F17/18(2006.01)i

According to International Patent Classification (IPC) or to both national classification and IPC

### B. FIELDS SEARCHED

Minimum documentation searched (classification system followed by classification symbols)

IPC:G01N G06F

Documentation searched other than minimum documentation to the extent that such documents are included in the fields searched

Electronic data base consulted during the international search (name of data base and, where practicable, search terms used)

CNTXT; ENTXTC; WPABSC; VEN; ENTXT; CJFD; CNKI; ISI Web of Science: 云南中烟, 卷烟, 烟, 木香, 香型, 香韵, 新植二烯, 正相关, 负相关, GC, MS, wood+, cigarette, smoke, aroma, negative, positive

### C. DOCUMENTS CONSIDERED TO BE RELEVANT

| Category* | Citation of document, with indication, where appropriate, of the relevant passages | Relevant to claim No. |
| --- | --- | --- |
| PX | CN 119291061 A (CHINA TOBACCO YUNNAN INDUSTRIAL CO., LTD.) 10 January 2025 (2025-01-10)<br>claims 1-10 | 1-10 |
| A | CN 104991024 A (CHINA TOBACCO YUNNAN INDUSTRIAL CO., LTD.) 21 October 2015 (2015-10-21)<br>description, paragraphs [0012]-[0109] | 1-10 |
| A | CN 106324124 A (CHINA TOBACCO YUNNAN INDUSTRIAL CO., LTD.) 11 January 2017 (2017-01-11)<br>entire document | 1-10 |
| A | CN 106198809 A (CHINA TOBACCO HENAN INDUSTRIAL CO., LTD. et al.) 07 December 2016 (2016-12-07)<br>entire document | 1-10 |
| A | CN 118130691 A (SHANGHAI TOBACCO GROUP CO., LTD.) 04 June 2024 (2024-06-04)<br>entire document | 1-10 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **20 August 2025** | **22 August 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 752 542 A1

## INTERNATIONAL SEARCH REPORT

| International application No. |
|---|
| **PCT/CN2025/102716** |

**C. DOCUMENTS CONSIDERED TO BE RELEVANT**

| Category* | Citation of document, with indication, where appropriate, of the relevant passages | Relevant to claim No. |
|---|---|---|
| A | CN 115792022 A (CHINA TOBACCO JIANGSU INDUSTRIAL CO., LTD.) 14 March 2023 (2023-03-14)<br>entire document | 1-10 |
| A | CN 105223303 A (CHINA TOBACCO YUNNAN INDUSTRIAL CO., LTD.) 06 January 2016 (2016-01-06)<br>entire document | 1-10 |
| A | WO 2022151570 A1 (CHINA TOBACCO YUNNAN INDUSTRIAL CO., LTD.) 21 July 2022 (2022-07-21)<br>entire document | 1-10 |

Form PCT/ISA/210 (second sheet) (July 2022)

**INTERNATIONAL SEARCH REPORT**
**Information on patent family members**

International application No.

**PCT/CN2025/102716**

| Patent document cited in search report | | | Publication date (day/month/year) | Patent family member(s) | Publication date (day/month/year) |
|---|---|---|---|---|---|
| CN | 119291061 | A | 10 January 2025 | None | |
| CN | 104991024 | A | 21 October 2015 | None | |
| CN | 106324124 | A | 11 January 2017 | None | |
| CN | 106198809 | A | 07 December 2016 | None | |
| CN | 118130691 | A | 04 June 2024 | None | |
| CN | 115792022 | A | 14 March 2023 | None | |
| CN | 105223303 | A | 06 January 2016 | None | |
| WO | 2022151570 | A1 | 21 July 2022 | None | |

Form PCT/ISA/210 (patent family annex) (July 2022)